Europäisches Patentamt

European Patent Office

Office européen des brevets

(11) Numéro de publication: **0 253 032**
**A1**

## (12) DEMANDE DE BREVET EUROPEEN

(21) Numéro de dépôt: **86401553.2**

(22) Date de dépôt: **11.07.86**

(51) Int. Cl.⁴: **B28D 1/04**

(43) Date de publication de la demande:
**20.01.88 Bulletin 88/03**

(84) Etats contractants désignés:
**AT BE CH DE FR GB IT LI LU NL SE**

(71) Demandeur: **SOCIETE DE MECANIQUE GENERALE (SMG) Société Anonyme dite:**
**26 route Nationale**
**F-41260 La Chaussee St Victor(FR)**

(72) Inventeur: **Prades, Jacques**
**26, route Nationale**
**F-41260 La Chaussée St Victor(FR)**

(74) Mandataire: **Faber, Jean-Paul**
**CABINET FABER 34, rue de Leningrad**
**F-75008 Paris(FR)**

(54) **Machine à couper des matériaux de construction.**

(57) Coupe de matériaux de construction.

Machine pour la coupe de matériaux comprenant un carter (1) avec une table (6), un disque (65), un bac (24), caractérisée en ce que le bac (24) est monté basculant dans le carter (1) le disque (65) étant entrainé par une machine électro-portative manuelle (55) à meuler, l'une des parois (27) du bac comportant des moyens pour la fixation de la tête de la machine (55) et des moyens étant prévus pour caler le bac (24) dans au moins une position dans laquelle le disque (65) est perpendiculaire à la table (6) et une position dans laquelle il est incliné à 45° par rapport à celle-ci.

FIG.2

EP 0 253 032 A1

## Machine à couper des matériaux de construction.

L'invention concerne une machine à couper des matériaux de construction.

L'invention vise, plus particulièrement, une machine simple et bon marché permettant de couper à des cotes sélectionnées des matériaux de revêtements et des carrelages, tels que de la céramique, de la faïence, du grès, de la pâte de verre, etc...

On connaît différentes machines qui compte tenu du coût et de leur capacité sont destinés à des chantiers importants.

De telles machines comprennent généralement une table supportant un chariot mobile sur lequel est posé le matériau à tronçonner, une potence portant un bras avec un moteur électrique dont l'arbre reçoit un disque de tronçonnage, et une pompe aspirant de l'eau dans un bac et la refoulant sur le disque pour le refroidir.

Ces machines, sont chères, lourdes et ne peuvent être par exemple montées sur un toit ou à l'étage d'un immeuble dans une salle de bain, par exemple.

La demanderesse dans son brevet français n° 2 462 252 a proposé une machine portative beaucoup plus simple, celle-ci comprenant un boîtier creux fermé par un couvercle amovible, ledit boîtier étant séparé en deux compartiments par une cloison, le premier contenant un moteur électrique et le second logeant le disque, l'arbre traversant un palier de la cloison, le couvercle présentant une fente au travers de laquelle passe le disque et le dessus de couvercle constituant une table de guidage pour le matériau à couper.

Une telle réalisation plus pratique et moins onéreuse que la précédente s'est avérée très intéressante, toutefois elle reste encore encombrante et onéreuse et, de plus elle ne permet pas, sans augmenter encore le poids, d'obtenir des vitesses de rotation du disque importantes. En effet, on réalise actuellement des disques à concentra tion diamentée qui ont une durée d'utilisation très longue et qui sont très efficaces, mais qui doivent tourner à des vitesses de l'ordre de 8 000 à 10 000 T/m.

Pour l'utilisation de ces disques diamentés on doit donc prévoir un multiplicateur de vitesse qui se prête mal à la conception de la machine de la technique antérieure.

On connaît sur le marché des machines électroportative manuelle à meuler, sur lesquelles on peut monter toutes sortes de disques, ces machines très simples ayant une vitesse de rotation élevée, mais ne pouvant être utilisée aisément pour couper des matériaux. En effet, tenue à la main, on ne peut, avec des machines effectuer des coupes régulières.

L'un des buts de la présente invention est de réaliser une machine à couper les matériaux de construction qui soit simple, robuste, légère et qui permette d'utiliser des disques nécessitant une vitesse de rotation élevée.

Le machine, selon l'invention est du type comprenant, un carter présentant une face supérieure constituant une table de guidage pour le matériau à couper, un disque de tronçonnage traversant une fente de ladite table, des moyens pour entraîner le disque en rotation, un bac logé dans le carter et destiné à recevoir de l'eau, et dans lequel s'étend, en partie, le disque, ladite machine étant caractérisée en ce que le bac est constitué par un élément indépendant du carter et monté pivotant dans le carter sur un axe porté par celui-ci, les moyens pour entraîner le disque en rotation étant constitués par une machine électro-portative manuelle à meuler présentant une tête s'étendant sensiblement perpendiculairement à son corps avec un arbre de sortie sur lequel est calé le disque, l'une des parois du bac comportant un trou pour le passage dudit arbre de sortie de la machine électro-portative et des moyens pour la fixation de ladite tête de cette dernière, des moyens étant prévus pour caler le bac dans au moins deux positions angulaires, un première position dans laquelle le disque s'étend perpendiculairement à la table et une seconde position dans laquelle ledit disque forme à la table un angle de l'ordre de 45°.

Grâce à cette disposition, on réalise une machine simple, peu encombrante et d'une utilisaton très pratique.

Suivant un détail constructif, la machine électro-portative est du type comportant concentriquement à l'arbre de sortie une bague pourvue de taraudages, les moyens pour la fixation de la tête de ladite machine électro-portative étant constitués par des vis traversant des trous de la paroi correspondante du bac et se vissant dans les taraudages de la bague. Ainsi la machine électro-portative manuelle peut être montée directement sur le bac sans aucune transformation ou adaptation.

De manière à protéger la machine électro-portative manuelle, la face de la paroi du bac destinée à recevoir la tête de la machine électrique comporte le long de son bord supérieur un rabat, au voisinage de son bord inférieur une tôle de protection et deux ailes d'extrémités solidaires des bords correspondants du rabat et de la tôle de protection, une épaisseur de matière isolante phoniquement pouvant être insérée entre les ailes.

Suivant une caractéristique de détail, les moyens pour caler le bac dans au moins deux positions angulaires comprennent une vis solidaire du bac et traversant une lumière arquée d'une paroi correspondante du carter et un écrou avec une tête moletée se vissant sur la vis pour prendre appui sur ladite paroi du carter.

Afin d'éviter les projections d'eau lors de la rotation du disque, le bac est en partie fermé par une plaquette et des déflecteurs sont prévus sur ledit bac.

Suivant une caractéristique constructive, la plaquette masquant en partie le bac comporte une barrette traversant la fente de la table et destinée à supporter un cache masquant en partie le disque.

Suivant un détail constructif, le cache est constitué par une plaquette présentant du côté du disque un creusage et dont une extrémité comporte une fente dans laquelle s'insère l'extrémité libre de la barrette, les lèvres de la fente étant susceptibles d'être rapprochées par le serrage d'un vis.

Suivant encore un détail constructif, le carter est constitué par un flan de tôle plié en U renversé pour présenter deux parois latérales et la paroi supérieure formant la table, les extrémités libres des parois latérales étant repliées en forme de gouttière pour constituer des assises, ledit carter étant complété par des parois d'extrémités soudées aux faces internes des parois latérales et de la paroi supérieure.

Enfin, l'une des extrémités de la paroi supérieure formant table est terminée par un rabat s'étendant sensiblement perpendiculairement à la table et pourvu d'une lumière allongée dans laquelle coulisse un guide d'une règle mobile sur la table parallèlement au plan du disque, une vis étant prévue pour bloquer ladite règle dans toutes positions désirées.

L'invention va maintenant être décrite avec plus de détails en se référant à un mode de réalisaton particulier donné à titre d'exemple seulement et représenté aux dessins annexés, dans lesquels :

Figure 1 est une vue en perspective d'une machine, selon l'invention.

Figure 2 est une vue en perspective de la machine de la figure 1 avec des arrachements.

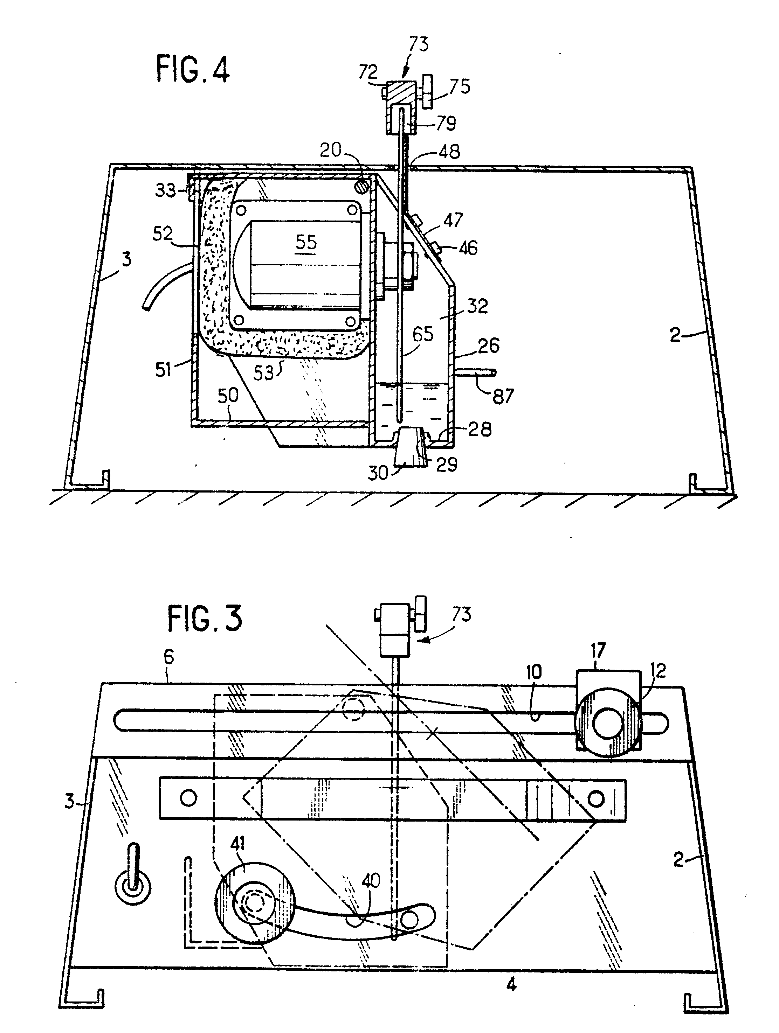

Figure 3 montre, en élévation et en bout, la machine, selon l'invention.

Figure 4 est une vue en coupe suivant la ligne IV-IV de la figure 2.

Figure 5 est une vue en coupe suivant la ligne V-V de la figure 1.

Figure 6 est une vue en coupe suivant la ligne VI-VI de le figure 1.

Figure 7 est une vue en perspective éclatée montrant le montage de la tête de l'outil.

La machine représentée aux figures comprend un carter désigné dans son ensemble par la référence 1, ledit carter 1 présentant deux parois latérales longitudinales 2 et 3, deux parois d'extrémités 4 et 5 et une paroi supérieure 6.

La paroi supérieure 6 et les deux parois latérales 2 et 3, sont formées d'un seul flan de tôle pliée en U renversé, les bords inférieurs des parois latérales 2 et 3 étant conformées en gouttière pour constituer des assises respectivement 7 et 8.

Les parois des extrémités 4 et 5 sont formées par des flans de tôle rapportés et soudés légèrement en retrait par rapport au bord correspondant des parois latérales 2 et 3.

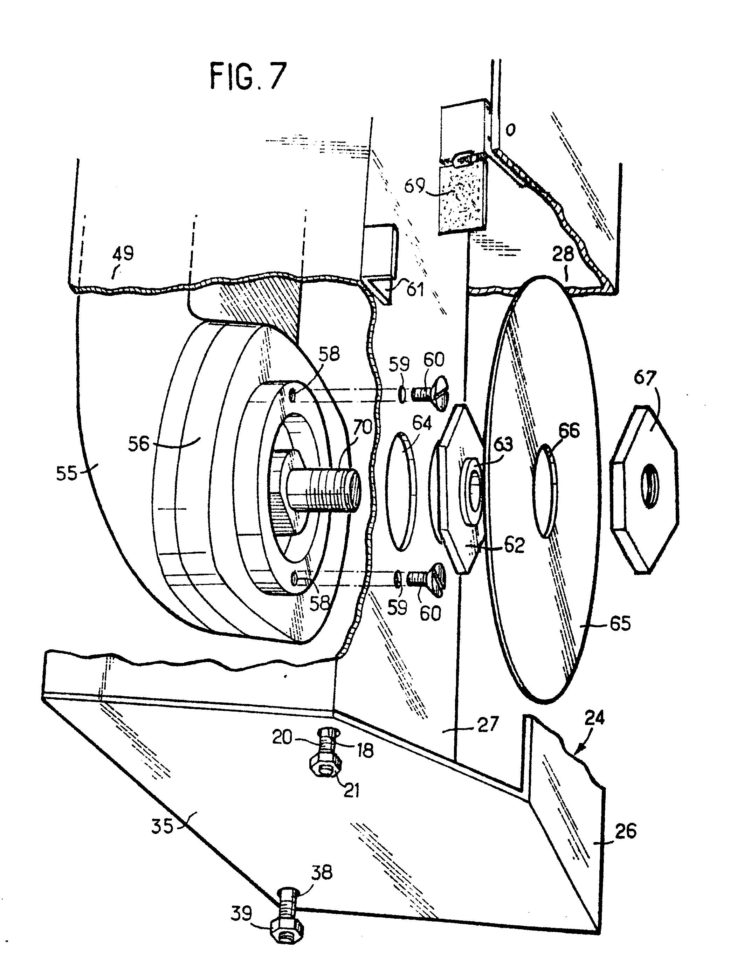

L'une des extrémités de la paroi supérieure 6 adjacente à la paroi 4 est terminée par un rabat 9 s'étendant entre les parois latérales 2 et 3. Le rabat 9 est percé d'une lumière allongée 10 qui est traversée par une vis 11 (voir figure 5) solidaire d'un boulon moleté 12 et se vissant dans un écrou 14 avec interposition d'une rondelle 13. La vis 11 traverse un trou 15 d'une patte 16 solidaire d'une règle 17 qui porte contre la face supérieure 6 du carter 1.

Les parois des extrémités 4 et 5 sont, le long du bord supérieur, en un point intermédiaire médian de leur largeur percées de trous respectivement 18 et 19, un axe 20 traversant lesdits trous et comportant à ses extrémités un filetage pour recevoir des écrous 21.

Dans le carter 1 s'étend un bac 24, le bac 24 comprend deux parois latérales longitudinales 26 et 27 et un fond 28 percé d'un trou de vidange 29 obturable par un bouchon 30.

La paroi latérale 26 est, à une extrémité, pourvue d'un prolongement qui est plié et soudé à l'extrémité de la paroi 27 pour former une paroi d'extrémité 32, ledit prolongement s'étendant au-delà de la paroi 27 pour former une aile 33.

L'extrémité de la paroi latérale 26 opposée à celle comportant l'aile 33 est prolongée et pliée pour former un côté 34 du bac 24 et une aile 35.

Les ailes 33 et 35 sont traversées par l'axe 20 de sorte que le bac 24 est monté basculant. Une vis (voir figure 6) traverse un trou taraudé 42 de l'aile 35, ladite vis étant engagée dans une lumière 40 de la paroi 4 et recevant un écrou 41 pourvu d'un boulon moleté un manchon 39 étant inséré entre la face interne de la paroi 4 et l'aile 35.

La lumière 40 est en forme d'arc de cercle et a une longueur et un rayon correspondant à un déplacement angulaire de 45° du bac 24.

Le bac 24 est en partie fermé par une plaquette 45 et sur laquelle est fixée par deux vis 46 une barrette 47 qui traverse une fente 48 de la paroi supérieure 6 du carter 1.

La paroi 27 est prolongée par un rabat 49 dont les bords sont soudés aux bords corresondant supérieurs des ailes 33 et 35.

Il est prévu une tôle de protection 50 s'étendant entre les ailes 33 et 35 et solidaire de la face externe de la paroi 27 au voisinage de son bord inférieur, ladite tôle 50 étant prolongée par une aile 51 pourvue d'ouvertures 52.

Dans le volume délimité par le rabat 49 les ailes 33 et 35, la tôle 50 et l'aile 51 est disposée une machine électro-portative à meuler 55 qui comprend un moteur électrique logé dans un boîtier et terminé par une tête 56 pourvue d'un arbre de sortie fileté 70. Afin de réduire le niveau sonore, on peut entourer la machine avec une épaisseur de mousse isolante phonétiquement 53, par exemple, de la mousse de polyéthylène.

La tête 56 comprend une bague 57 percée de deux trous taraudés 58 destinés à recevoir des vis 60. Normalement, sur ce type d'appareil, sur la bague 57 est fixé par les vis 60 un carter de protection. Ici, on a prévu deux trous 59 pour le passage des vis 60 et une ouverture 64 destinée à être traversée par l'axe 70. D'une manière simple, rapide et efficace la machine 55 est ainsi solidaire du bac 24, le corps de celle-ci étant protégé par le rabat 49, les ailes 33 et 35 et la tôle 50.

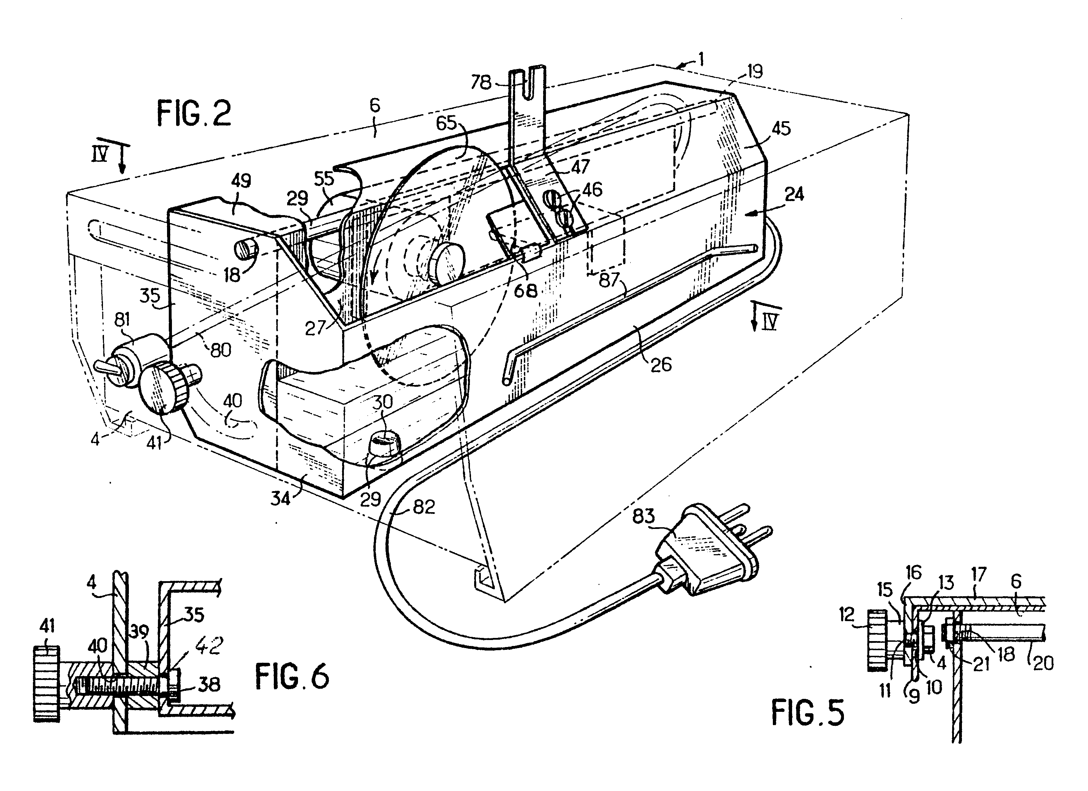

Sur l'axe 70 se visse un écrou six pans 62 comportant un épaulement central 63 destiné à coopérer avec un trou 66 d'un disque 65, celui-ci étant fixé par un contre écrou 67. Afin d'éviter les projections d'eau lors de la rotation du disque 65 qui tourne dans le sens de la flèche (figure 2) il est prévu trois petits déflecteurs 61-68 et 69.

Une machine électro-portative à meuler, telle que la machine 55 qui se trouve dans le commerce et qui a l'avantage outre, d'être relativement bon marché, d'avoir un arbre de sortie 70 qui tourne à une très grande vitesse de l'ordre de 10 000 T/m ce qui permet d'utiliser des disques à concentration diamentée 65 d'un type particulièrement efficace lorsque la vitesse de rotation est importante.

Le disque 65 traverse la fente 48 et est protégé par un cache 72 constitué d'une plaquette dont une extrémité 73 comporte une fente 74 dont les lèvres sont susceptibles d'être rapprochées par le serrage d'une vis 75.

La barrette 47 comporte, à son extrémité libre une fente 78 et s'insère entre les lèvres de la fente 74.

Le cache 73 comporte un creusage 79 de manière à coiffer le disque 65 sans que celui-ci touche ledit cache.

La machine 55 comporte un cordon d'alimentation 80 qui peut être raccordé à un interrupteur 81 auquel aboutit un cordon 82 pourvu d'une fiche mâle 83 destinée à être engagée dans une prise de courant électrique d'un réseau de distribution.

La paroi 26 comporte latéralement une barrette 87 pour permettre d'enrouler le cordon 82 lorsque la machine n'est pas utilisée. La face supérieure 6 est percée d'un trou oblong 89 situé au droit du bac 24.

Enfin la paroi 4 est pourvue d'une poignée 90 pour faciliter le transport.

La machine, selon l'invention, est simple, pratique, très bon marché et elle permet de couper toutes sortes de matériaux de revêtement et carrelages.

Dans le bac 24 on verse un peu d'eau pour refroidir le disque à concentration diamentée 65, l'eau étant déversée par le trou 89. Lorsque l'utilisaton de la machine est terminée on vidange l'eau en retirant le bouchon 30.

La paroi supérieure 6 constitue une table sur laquelle le matériau à couper sera guidé. La position de la règle 17 est choisie suivant la coupe à effectuer et ladite règle est bloquée par le serrage de la vis 11.

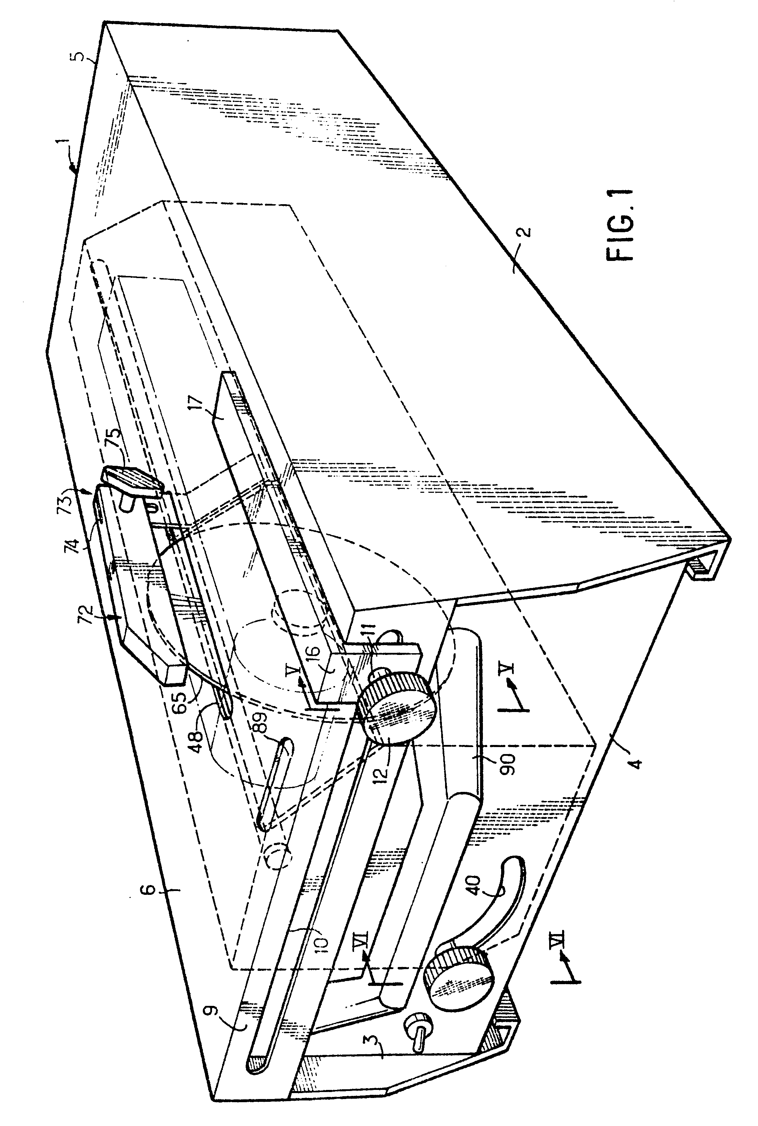

Si on veut effectuer une coupe droite, on cale le bac 24 dans la position angulaire représentée aux figures 1 et 2 c'est-à-dire que l'écran 41 est serré afin d'être fixé à l'extrémité de la lumière 40 adjacente à l'interrup teur 81. Si au contraire, on désire effectuer une coupe à 45° on desserre l'écrou 41 et on fait pivoter le bac 24 sur l'axe 20 pour que la vis 38 vienne buter contre l'extrémité de la lumière 40 adjacente à la paroi 2. Bien entendu, on peut caler le bac 24 dans toutes les positions angulaires entre ces deux positions extrêmes.

Bien entendu, l'invention n'est pas limitée au mode de réalisation qui vient d'être décrit et représenté. On pourra y apporter de nombreuses modifications de détail sans sortir pour cela du cadre de l'invention.

**Revendications**

1° - Machine pour la coupe de matériaux du type comprenant, un carter (1) présentant une face supérieure (6) constituant une table de guidage pour le matériau à couper, un disque de tronçonnage (65) traversant une fente (48) de ladite table, des moyens pour entraîner le disque (65) en rotation, un bac (24) logé dans le carter (1) et destiné à recevoir de l'eau, et dans lequel s'étend, en partie, le disque (65), ladite machine étant caractérisée en ce que le bac (24) est constitué par un élément indépendant du carter et monté pivotant dans le carter (1) sur un axe (20) porté par celui-ci, les moyens pour entraîner le disque (65) en rotation étant constitués par une machine électro-portative manuelle à meuler présentant une tête (55) s'étendant sensiblement perpendiculairement à son corps avec un arbre de sortie 70 sur lequel est calé le disque, l'une des parois (27) du bac (24) comportant un trou pour le passage dudit arbre (70) de sortie de la machine électro-portativ et des moyens (59-60) pour la fixation de ladite tête (55) de cette dernière, des moyens (38, 40,41) étant prévus pour caler le bac (24) dans au moins deux positions angulaires, une première position dans laquelle le disque s'étend perpendiculairement à la table et une seconde position dans laquelle ledit disque (65) forme à la table un angle de l'ordre de 45°.

2° - Machine pour la coupe de matériaux, selon la revendication 1, caractérisée en ce que la machine électro-portative, est du type comportant concentriguement à l'arbre de sortie (70) une bague (57) pourvue de taraudages (58), les moyens pour la fixation de la tête (55) de ladite machine électro-portative étant constitués par des vis (60) traversant des trous (59) de la paroi correspondante (27) du bac et se vissant dans les taraudages (58) de la bague (57).

3° - Machine pour la coupe de matériaux, selon la revendication 1, caractérisée en ce que la face de la paroi (27) du bac (24) destinée à recevoir la tête (55) de la machine électro-portative comporte le long de son bord supérieur un rabat (49), du voisinage de son bord inférieur une tôle de protection (50) et deux ailes d'extrémités (33,35) solidaires des bords correspondants du rabat (49) et de la tôle de protection (50), une épaisseur de matière isolante phoniquement (53) étant insérée entre les ailes.

4° - Machine pour la coupe de matériaux, selon la revendication 1, caractérisée en ce que les moyens (38,40, 41) pour caler le bac dans au moins deux positions angulaires comprennent une vis (38) solidaire du bac (24) et traversant une lumière arquée (40) d'une paroi (4) correspondante du carter (1) et un écrou (41) avec une tête moletée se vissant sur la vis (38) pour prendre appui sur ladite paroi (4) du carter (1).

5° - Machine pour la cope de matériaux, selon la revendication 1, caractérisée en ce que le bac (24) est en partie fermé par une plaquette (45) et des déflecteurs sont prévus sur le bac (24).

6° - Machine pour la coupe de matériaux, selon la revendication 5, caractérisée en ce que la plaquette (45) masquant en partie le bac (24) comporte une barrette (47) traversant la fente (48) de la table et destinée à supporter un cache (72) masquant en partie le disque.

7° - Machine pour la coupe de matériaux, selon la revendication 6, caractérisée en ce que la cache (72) est constitué par une plaquette présentant du côté du disque un creusage (79) et dont une extrémité comporte une fente (74) dans laquelle s'insère l'extrémité libre de la barrette (47), les lèvres de la fente étant susceptibles d'être rapprochées par le serrage d'une vis (75).

8° - Machine pour la coupe de matériaux, selon la revendication 1, caractérisée en ce que le carter (1) est constitué par un flan de tôle plié en U renversé pour présenter deux parois latérales (2,3) et la paroi supérieure (6) formant la table, les extrémités libres des parois latérales étant repliées en forme de gouttière pour constituer des assises (7 et 8), ledit carter (1) étant complété par des parois d'extrémités (4 et 5) soudées aux faces internes des parois latérales (2,3) et de la paroi supérieure (6).

9° - Machine pour la coupe de matériaux, selon la revendicaton 8, caractérisée en ce que l'une des extrémités de la paroi supérieure formant table est terminée par un rabat (9) s'étendant sensiblement perpendiculairement à la table et pourvu d'une lumière allongée (10) dans laquelle coulisse un guide d'une règle (17) mobile sur la table (6) parallèlement au plan du disque (65), une vis (11-12) étant prévue pour bloqeur ladite règle dans toutes positions désirées.

FIG.1

0 253 032

FIG.2

78

65

6

19

49

55

47

45

29

46

24

18

87

35

68

IV

81

26

80

IV

27

4

41

40

34

30

29

82

83

0 253 032

4

41

35

40

39

42

38

FIG.6

15

16

13

17

6

12

4

21

18

20

11

9

10

FIG.5

**FIG. 4**

**FIG. 3**

# FIG. 7

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| A | FR-A-2 497 717  (M. GOUBAUD) <br> * En entier * | 1-9 | B 28 D   1/04 |
| A | EP-A-0 014 869 <br> (MAFELL-MASCHINENFABRIK RUDOLF MEY KG) <br> *  En entier, en particulier page 8, lignes 12-14; figure 1 * | 1-9 | |
| A | LU-A-  82 037  (SOCIETE DE MECANIQUE GENERALE) <br> * En entier * | 1-9 | |

| DOMAINES TECHNIQUES RECHERCHES (Int. Cl.4) |
|---|
| B 28 D <br> B 24 B <br> B 23 D <br> B 27 B |

Le présent rapport de recherche a été établi pour toutes les revendications

| Lieu de la recherche | Date d'achèvement de la recherche | Examinateur |
|---|---|---|
| LA HAYE | 05-03-1987 | MOET H.J.K. |